# EUROPÄISCHE PATENTSCHRIFT

(11) **EP 2 295 304 B1**
(45) Veröffentlichungstag und Bekanntmachung des Hinweises auf die Patenterteilung: **20.03.2019**
(21) Anmeldenummer: 09011634.4
(22) Anmeldetag: 11.09.2009
(51) Int. Cl.: B61D 17/10, B61D 17/18

(54) **Fussbodenplatte mit verbessertem akustischem Verhalten**
Floor board with improved acoustics
Plaque de sol dotée d'un comportement acoustique amélioré

(43) Veröffentlichungstag der Anmeldung: 16.03.2011
(73) Patentinhaber: ALSTOM Transport Technologies, 93400 Saint-Ouen (FR)
(72) Erfinder: Krüger, Lars, 38106 Braunschweig (DE)
(74) Vertreter: Lavoix

(56) Entgegenhaltungen:
- EP-A2- 0 982 213
- DE-A1- 2 251 170
- DE-A1- 19 927 003
- DE-T2- 69 422 430
- JP-A- 2000 073 482
- US-A- 3 160 549

## Beschreibung

In modernen Fahrzeugen, insbesondere Schienenfahrzeugen, die für den Personenverkehr eingesetzt werden, wird im Innenraum ein möglichst geringer Geräuschpegel erwartet, um eine komfortable Reise zu ermöglichen. Gleichzeitig steht nur ein begrenzter Bauraum zur Verfügung. Außerdem soll das Gewicht möglichst gering sein. Daher gibt es verschiedene Bestrebungen, Fußbodenplatten für Fahrzeuge bereitzustellen, die ein hohes Schalldämmmaß und eine hohe Körperschalldämpfung bei gleichzeitig geringer Dicke und geringem Gewicht aufweisen.

So ist beispielsweise aus der EP 0 982 213 B1 ein schalldämmendes Fußbodenelement für Schienenfahrzeuge bekannt, welches eine Trägerplatte umfasst, an deren Unterseite, das heißt auf der einer Schallquelle zugewandten Seite, eine Dämmstoffschicht aufgebracht ist. Gestützt wird die Trägerplatte an verschiedenen Tragelementen. Die DE 694 22 430 T2 offenbart ein Vibrationsdämpfungsprofil, dessen Herstellungsverfahren und ein Konstruktionselement für ein Transportflugzeug.

Der Erfindung liegt die Aufgabe zugrunde, eine Fußbodenplatte insbesondere hinsichtlich ihres Körperschallverhaltens weiter zu verbessern.

Diese Aufgabe wird erfindungsgemäß mit einer Fußbodenplatte gemäß Anspruch 1 gelöst.

### Vorteile der Erfindung

Durch die Kombination einer Trägerplatte, welche dazu dient, das Gewicht der auf ihr stehenden Personen in die Fahrzeugstruktur einzuleiten, und einer erfindungsgemäßen zusätzlichen Platte kann bei nahezu identischem Bauraumbedarf und nur sehr geringem zusätzlichen Gewicht, eine deutliche Verbesserung des Körperschallabsorptionsvermögens der Trägerplatte beziehungsweise der Fußbodenplatte erreicht werden.

Erreicht wird dies dadurch, dass die erfindungsgemäße zusätzliche Platte, die beispielsweise aus Stahlblech oder Aluminiumblech von ca. einem Millimeter Dicke besteht, elastisch und mit mechanischen Verlusten behaftet flächig mit der Trägerplatte verbunden wird. Dies bedeutet, dass die zusätzliche Platte auf die Trägerplatte in aller Regel aufgeklebt wird, wobei der Auswahl des Klebstoffs eine erhebliche Bedeutung zukommt.

Ein voll aushärtender Klebstoff, wie zum Beispiel ein Zweikomponenten-Epoxidharz, ist nicht geeignet, da er nach dem Aushärten kein gutes Eigendämpfungsverhalten hat. Besonders vorteilhaft ist es, wenn die zusätzliche Platte mittels eines viskoelastischen Klebstoffes mit der Trägerplatte verklebt wird. Ein solcher Klebstoff ermöglicht auch nach dem Aushärten kleinste Relativbewegungen mit hohen inneren Verlusten zwischen der Trägerplatte und der zusätzlichen Platte. Infolgedessen verbessert sich das Körperschallabsorptionsvermögen der Fußbodenplatte deutlich.

Um die erfindungsgemäße Fußbodenplatte den Anforderungen im täglichen Bahnbetrieb entsprechend auszurüsten, ist weiter vorgesehen, dass auf der Trägerplatte ein Fußbodenbelag aufgeklebt ist.

Die Trägerplatte kann besonders bevorzugt aus wasserdicht verleimtem Sperrholz hergestellt werden. Sperrholz ist ein häufig verwendeter Werkstoff, um Fußböden von Schienenfahrzeugen herzustellen.

Daher ist es auch möglich, einen herkömmlichen bereits in Serie gefertigten Sperrholzfußboden durch Aufbringen der erfindungsgemäßen zusätzlichen Platte "nachzurüsten" und die erfindungsgemäße Fußbodenplatte mit geringem Aufwand in die laufende Serienproduktion eines Schienenfahrzeugs zu integrieren.

Dabei kommt besonders vorteilhaft zum Tragen, dass die zusätzliche Platte sowie die Schicht aus viskoelastischem Klebstoff die Dicke der Fußbodenplatte nur in geringem Umfang beeinflussen. In aller Regel wird eine zusätzliche Platte mit einer Dicke von unter einem Millimeter und eine Dicke der Klebstoffschicht von etwa einem Millimeter ausreichend sein. In der Summe wird die Fußbodenplatte durch die erfindungsgemäße zusätzliche Platte und den viskoelastischen Klebstoff um etwa zwei Millimeter in der Dicke zunehmen, was in aller Regel ohne größere konstruktive Änderungen am Schienenfahrzeug realisiert werden kann. Selbstverständlich ist es auch möglich, wenn die Dicke unbedingt konstant bleiben muss, die Trägerplatte entsprechend dünner und möglicherweise aus einem höher belastbaren Material herzustellen, so dass die Gesamtdicke der erfindungsgemäßen Fußbodenplatte exakt gleich groß ist wie bei einer herkömmlichen Trägerplatte.

Ob die zusätzliche Platte aus Stahl oder Aluminium hergestellt wird, hängt von den Umständen des Einzelfalls ab. Insbesondere sind hier Gesichtspunkte der Kontaktkorrosion, Verarbeitbarkeit und der Kosten zu berücksichtigen.

Eine sehr vorteilhafte Variante der erfindungsgemäßen Fußbodenplatte ist es, die zusätzliche Platte aus einem Verbundwerkstoff, insbesondere aus kohlefaserverstärktem Kunststoff (CFK) oder glasfaserverstärktem Kunststoff (GFK), herzustellen. Da diese sehr leicht sind, kann in vielen Fällen eine weitere Gewichtsreduktion erreicht werden. Gleichzeitig wird Korrosion vermieden.

Als geeigneter viskoelastischer Klebstoff zum Verbinden der zusätzlichen Platte mit der Trägerplatte hat sich z.B. SIKA 265 bewährt.

Um eine weitere Verbesserung der akustischen Eigenschaften der erfindungsgemäßen Fußbodenplatte zu erreichen, kann auf der zusätzlichen Platte noch eine Dammschicht, wie sie aus dem Stand der Technik bereits bekannt ist, aufgebracht werden oder die erfindungsgemäße Fußbodenplatte in einen Aufbau aus weiteren akustisch wirksamen Schichten integriert werden.

Eine Verbesserung der akustischen Eigenschaften der erfindungsgemäßen Fußbodenplatte im niederfrequenten Bereich wird dadurch erreicht, dass die zusätzliche Platte segmentiert ist.

In der Regel ist hier eine Segmentgröße mit Kantenlängen von ca. 200 Millimeter günstig.

Um zu vermeiden, dass zwischen der tragenden Struktur des Fahrzeugs und der Fußbodenplatte Körperschall übertragen wird, können an der Trägerplatte elastische Abstandshalter vorgesehen werden, wobei die Abstandshalter sich gegen tragende Strukturen des Fahrzeugs abstützen. Diese Abstandshalter können z.B. aus einer gummielastischen Schicht oder PUR-Schäumen bestehen. Somit kann die Fußbodenplatte schalltechnisch von der Struktur weitgehend entkoppelt werden und trotzdem eine Ableitung der auf die Fußbodenplatte wirkenden Gewichtskräfte in die tragende Struktur des Schienenfahrzeugs ermöglichen.

Die erfindungsgemäße Fußbodenplatte kann besonders bevorzugt in einem Fahrzeug, insbesondere einem schienengebundenen Fahrzeug, eingesetzt werden.

Ein besonderer Vorteil der erfindungsgemäßen Fußbodenplatte ist auch darin zu sehen, dass die zusätzliche Platte nicht genauso groß wie die Trägerplatte ausgeformt sein muss. Es ist vielmehr möglich, nur die Bereiche der Trägerplatte, in denen ein besonders hohes Körperschallabsorptionsvermögen erforderlich ist, mit einer erfindungsgemäßen zusätzlichen Platte zu versehen. Dadurch ist es möglich, lokal und gezielt das Körperschallabsorptionsvermögen dort zu verbessern, wo es gewünscht wird. Ebenfalls kann bei entsprechender Wahl der zusätzlichen Platte durch die erhöhte Flächenmasse des Fußbodenaufbaus die Schalltransmission erhöht und den lokalen Verhältnissen angepasst werden. Hieraus ergeben sich Kosteneinsparungen, eine vereinfachte Einführung der erfindungsgemäßen Fußbodenplatte bei bereits in Serie gefertigten Fahrzeugen und eine nur minimale Gewichtszunahme.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und in den Patentansprüchen beschriebenen Merkmale können sowohl einzeln als auch in beliebiger Kombination miteinander erfindungswesentlich sein.

### Zeichnung

Es zeigen:
- Figur 1: einen Querschnitt durch ein Ausführungsbeispiel einer erfindungsgemäßen Fußbodenplatte,
- Figur 2: einen Schnitt durch eine erfindungsgemäße Fußbodenplatte mit und ohne Schallanregung,
- Figur 3: das Schallabsorptionsvermögen der erfindungsgemäßen Fußbodenplatte im Vergleich zu einer herkömmlichen Fußbodenplatte und
- Figur 4: eine Ansicht von oben auf einen Fußboden eines Schienenfahrzeugs mit lokal begrenzter zusätzlicher Platte.

### Beschreibung der Ausführungsbeispiele

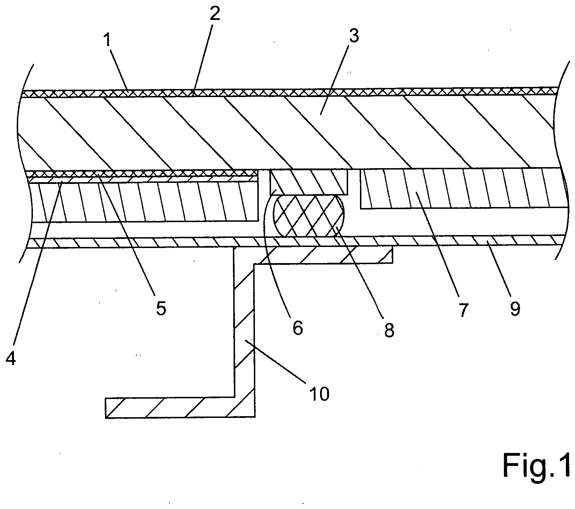

Figur 1 zeigt eine erfindungsgemäße Fußbodenplatte, umfassend eine Trägerplatte 3 sowie einen aufgeklebten Fußbodenbelag 1. Die Klebstoffschicht zwischen dem Fußbodenbelag 1 und der Trägerplatte 3 ist mit dem Bezugszeichen 2 bezeichnet. Als Trägerplatte 3 kann zum Beispiel Sperrholz verwendet werden. Damit die Auflagerkräfte der Trägerplatte 3 in den Fahrzeugrahmen 10 geleitet werden können, können zwischen einem Fahrzeugrahmen 10 und der Unterseite der Trägerplatte 3 ein oder mehrere Abstandshalter 6 vorgesehen sein. Der Abstandshalter 6 kann zum Beispiel als Sperrholzleiste ausgeführt sein.

Damit der Körperschall von dem Fahrzeugrahmen 10 nicht über die Abstandshalter 6 direkt in die Trägerplatte 3 eingeleitet wird, ist zwischen dem Abstandshalter 6 und dem Fahrzeugrahmen 10 eine gummielastische Schicht 8 vorgesehen, die gleichzeitig auch einen Höhenausgleich bewirkt.

Auf dem Fahrzeugrahmen 10 ist in herkömmlicher Weise ein Abschlussblech 9 vorhanden, welches das Eindringen von Schmutz und Feuchtigkeit in das Fahrzeuginnere verhindert.

An der Trägerplatte 3 links des Abstandshalters 6 ist an der unteren Seite der Trägerplatte 3 eine zusätzliche Platte 4 mit Hilfe eines viskoelastischen Klebstoffes 5 flächig und aufgrund der Eigenschaften des Klebstoffes trotzdem elastisch aufgeklebt. Als zusätzliche Platte im Sinne der beanspruchten Erfindung wird jede Platte angesehen, die in der Lage ist, bei Biegeverformungen des Verbundes in der Klebeschicht deutliche höhere Schubverformungen hervorzurufen als sie in der Trägerplatte oder in der zusätzlichen Platte auftreten, d.h. die zusätzliche Platte und die Trägerplatte haben einen deutlich höheren Schubmodul als die Klebeschicht.

Ein Gewebe aus hochfesten Kohlefasern hat zwar eine hohe Zugfestigkeit und einen entsprechend hohen Elastizitätsmodul, allerdings hat sie zunächst noch keine Schubsteifigkeit, da sich die verschiedenen Fasern des Gewebes relativ zueinander verschieben können. Erst durch das Einbringen eines aushärtenden Kunstharzes, wird dieses Kohlefasergewebe zu einer zusätzlichen Platte. Dieser Verbundwerkstoff wird üblicherweise auch als kohlefaserverstärkter Kunststoff (CFK) bezeichnet. In gleicher Weise erfüllt auch eine Platte aus Stahlblech oder anderer Metallbleche die Anforderungen an eine zusätzliche Platte 4.

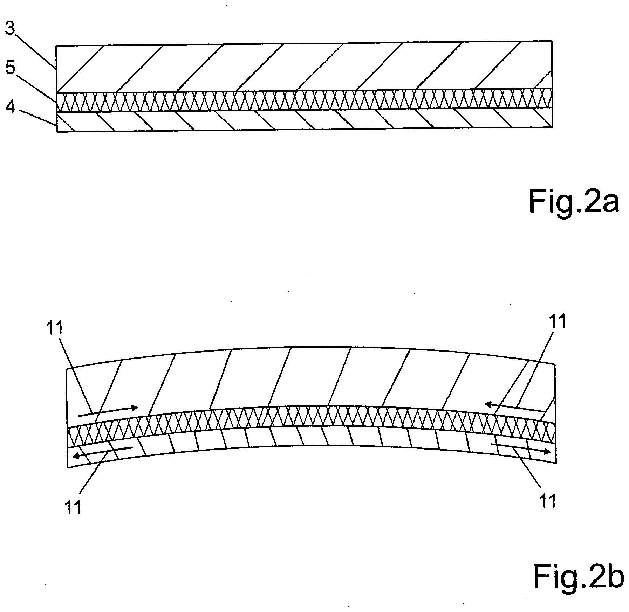

Dem viskoelastischen Klebstoff 5 zwischen der zusätzlichen Platte 4 und der Trägerplatte 3 kommt für die Absorptionseigenschaften des Verbundes eine große Bedeutung zu, da er - wie später noch anhand der Figur 2 erläutert werden wird - einen wichtigen Beitrag zum Abbau der Schwingungsenergie leistet.

Um das Schalldämmmaß des gesamten Fußbodenaufbaus weiter zu verbessern, kann zwischen der zusätzlichen Platte 4 beziehungsweise der Trägerplatte 3 und dem Abschlussblech 9 noch eine Lage aus einem Dämpfungsmaterial 7 aufgebracht werden. Wie bei vielen hoch entwickelten Konstruktionen mit optimierten akustischen Eigenschaften, kann auch bei Verwendung der erfindungsgemäßen Fußbodenplatte eine Kombination verschiedener Maßnahmen beziehungsweise Schichten (siehe insbesondere die Klebstoffschicht 5, die zusätzliche Platte 4, die Dämmschicht 7 und das Abschlussblech 9) ein optimiertes Schalldämmmaß sowie ein optimiertes Körperschallabsorptionsvermögen bei gleichzeitig geringem Gewicht und geringem Bauraumbedarf erzielt werden.

Anhand der Figur 1 ist deutlich zu sehen, dass sich die zusätzliche Platte 4 nicht über die ganze Länge der Trägerplatte 3 erstrecken muss. Es kann vielmehr ausreichend sein, wenn dort, wo eine lokal begrenzte Schallquelle vorhanden ist, die erfindungsgemäße zusätzliche Platte 4 mit dem viskoelastischen Klebstoff 5 an der Trägerplatte 3 angeklebt wird, um dort lokal ein höheres Körperschallabsorptionsvermögen bzw. ein erhöhtes Schalldämmmaß zu erreichen.

Selbstverständlich kann es aber auch vorteilhaft sein, insbesondere wenn es sich bei der erfindungsgemäßen Fußbodenplatte um Handelsware handelt, die beispielsweise in einer Plattengröße von 2m x 3m vertrieben wird, die zusätzliche Platte 4 über die gesamte Fläche der Trägerplatte 3 aufzubringen. Eine solche Platte wird erst nach dem Aufbringen der zusätzlichen Platte 4 zugeschnitten und in ein Schienenfahrzeug eingebaut.
Bei in Serie gefertigten Schienenfahrzeugen ist es jedoch in der Regel wirtschaftlicher nur dort, wo ein besonders gutes Schallabsorptionsvermögen gefordert ist, die zusätzliche Platte 4 mit dem viskoelastischen Klebstoff 5 aufzukleben.

Anhand der Figur 2 soll nun die Wirkungsweise der erfindungsgemäßen Fußbodenplatte erläutert werden. In der Figur 2a sind die Trägerplatte 3, die Schicht 5 aus viskoelastischem Klebstoff und die zusätzliche Platte 4 nochmals im Längsschnitt dargestellt. In der Figur 2a wird die Trägerplatte 3 nicht durch Schall, sei es Körperschall oder Luftschall, in Schwingungen versetzt, so dass sich ein Gleichgewichtszustand zwischen der Trägerplatte 3 und der zusätzlichen Platte 4 einstellt. Wenn nun die Trägerplatte 3 beziehungsweise die erfindungsgemäße Fußbodenplatte durch Körperschall oder Luftschall zu Schwingungen angeregt wird, führt dies, wie in Figur 2b stark übertrieben dargestellt, zu leichten Biegungen der Trägerplatte 3.

Durch Ankopplung der zusätzlichen Platte 4 an die Trägerplatte 3 durch die Klebeschicht 5 führt die zusätzliche Platte ebenfalls diese Biegung aus. Bei der Übertragung der hierbei auftretenden Schubspannungen weist die Klebeschicht 5 aufgrund ihres geringen Schubmoduls deutlich größere Schubverzerrungen auf als sie in der Trägerplatte 3 oder der zusätzlichen Platte 4 auftreten.

Die Schubspannungen sind in Figur 2b durch entgegengesetzt gerichtete Pfeile 11 angedeutet. Diese Schubkräfte werden von dem viskoelastischen Klebstoff 5 übertragen, wobei sich der viskoelastische Klebstoff 5 verformt.

Wird die Trägerplatte 3 durch den (Körper-)Schall in Schwingungen versetzt, biegt sie sich abwechselnd nach oben, wie in Figur 2b angedeutet und nach unten (nicht dargestellt). Dieser Wechsel findet entsprechend der Frequenz statt, mit der die Trägerplatte 3 schwingt. Jede Biegung der Trägerplatte erzwingt dabei auch eine Verformung des viskoelastischen Klebstoffs 5. Diese Verformung des viskoelastischen Klebstoffs 5 führt aufgrund seines hohen Verlustfaktors zu einer Umwandlung der Schwingungsenergie in Wärme und somit zu einer starken Dämpfung der Schwingungsbewegung der Trägerplatte 3. Die Ausbreitung von Körperschall wird somit breitbandig deutlich verringert und die Schalldämmung frequenzabhängig verbessert. Insbesondere im Bereich der Koinzidenzfrequenz wird der Einbruch der Luftschalldämmung durch die höhere Körperschalldämpfung verringert. Weitere Verbesserungen der Luftschalldämmung ergeben sich durch eine höhere Massenbelegung entsprechend dem Massengesetz.

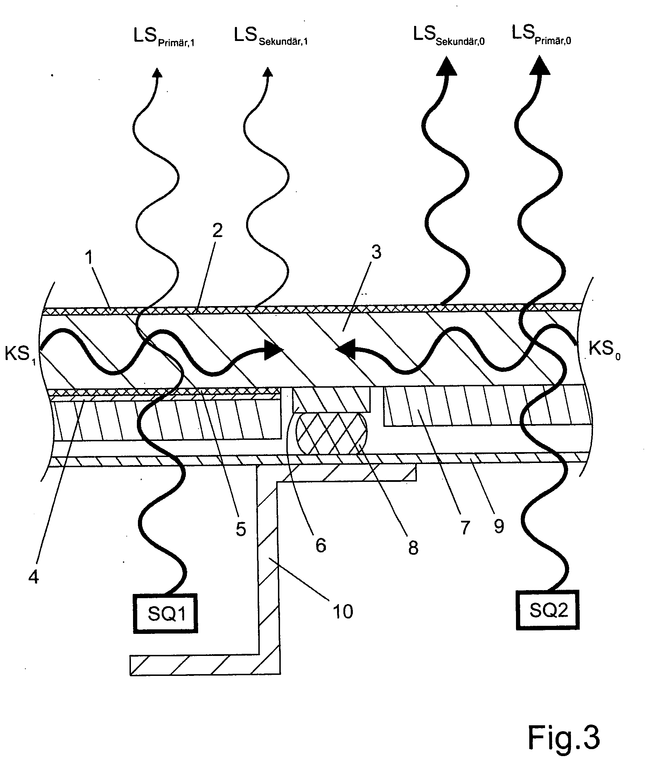

In Figur 3 ist das Ausführungsbeispiel gemäß Figur 1 nochmals in seiner Wirkungsweise etwas deutlicher dargestellt. Dabei wird unterstellt, dass in der Fahrzeugstruktur sowohl unterhalb der zusätzlichen Platte 4 eine Schallquelle SQ1 als auch im rechten Bereich der Trägerplatte 3, dort wo keine zusätzliche Platte 4 angeordnet ist, eine Schallquelle SQ2 vorhanden sei. Beide Schallquellen werden als gleich angenommen. Die Schallquellen SQ1 und SQ2 verursachen den primären Luftschall LS_{primär,1} und LS_{primär,0} im Innenraum des Fährzeuges, da von beiden Teilen der Fußbodenplatte Schall entsprechend ihrer Schalldämmung teilweise durchgelassen wird. Der primäre Luftschall LS_{primär,1} auf der linken Seite ist geringer als der Luftschall LS_{primär,0} auf der rechten Seite, da in diesem Bereich der Luftschalldämmungseinbruch in der Koinzidenzfrequenz der Trägerplatte 3 durch die höhere Körperschalldämpfung durch den erfindungsgemäßen Aufbau geringer ausfällt und der Schall durch die höhere Massenbelegung durch die zusätzlichen Schichten 4 und 5 entsprechend besser gedämmt wird. Bei gleicher Körperschallanregung auf der linken und rechten Seite bildet sich aufgrund der höheren Körperschalldämpfung durch den erfindungsgemäßen Aufbau auf der linken Seite eine geringere Körperschallamplitude aus als auf der rechten Seite, so dass der durch den Körperschall abgestrahlte sekundäre Luftschall auf der linken Seite LS_{sekundär,1} kleiner ausfällt als LS_{sekundär,0} auf der rechten Seite. Weitere Mechanismen der Schalldämmung werden in diesem Beispiel durch das Abschlussblech 9 und die Absorberschicht 7 genutzt.

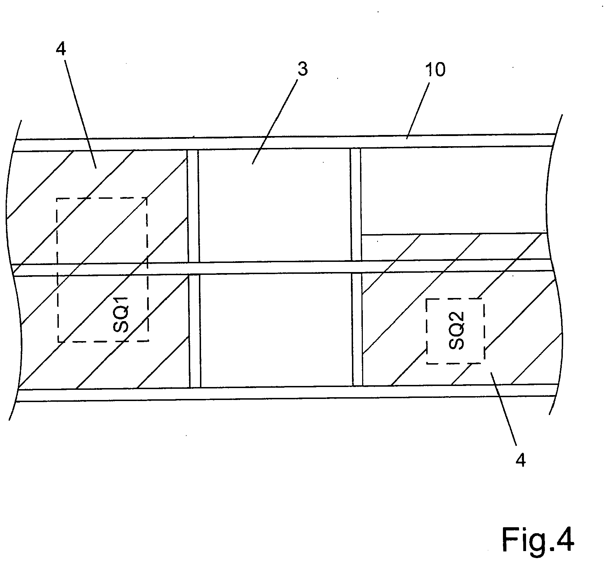

Anhand der Figur 4 soll nochmals verdeutlicht werden, dass es möglich ist, die zusätzliche Platte 4 innerhalb des Fahrzeugrahmens 10 bedarfsgerecht einzusetzen. Es sei eine Schallquelle SQ1 und eine zweite Schallquelle SQ2 vorhanden. Die Schallquelle SQ1 kann zum Beispiel ein Drehgestell oder ein Radsatz des Schienenfahrzeugs sein und erstreckt sich somit über die gesamte Breite des Schienenfahrzeugs, während die zweite Schallquelle SQ2 beispielsweise der Luftkompressor oder eine sonstige Schallquelle sein kann. Um das Kosten-Nutzen-Verhältnis zu optimieren, kann nun vorgesehen sein, nur in dem Bereich der Schallquellen SQ1 und SQ2 zusätzliche Platten 4 an der Trägerplatte 3 zu befestigen. Dies ist in Figur 4 durch die schraffierten Flächen angedeutet. In den anderen Bereichen des Schienenfahrzeugs sind keine Schallquellen vorhanden, so dass auf die zusätzliche Platte 4 verzichtet werden kann und somit Material- und Fertigungskosten sowie Gewicht eingespart werden können.

## Patentansprüche

1. Fußbodenplatte für ein schienengebundenes Fahrzeug umfassend eine Trägerplatte (3), wobei mindestens auf einer Seite der Trägerplatte (3) mindestens bereichsweise eine zusätzliche Platte (4) derart flächig befestigt ist, dass bei Schubbewegungen zwischen dieser und der Trägerplatte hohe mechanische Verluste auftreten, **dadurch gekennzeichnet, dass** die Trägerplatte (3) aus Sperrholz oder einer Sandwichplatte mit Aluminiumdeckschichten und Waben- oder Schaumkernen besteht, und dass die zusätzliche Platte (4) segmentiert ist.

2. Fußbodenplatte nach einem der vorhergehenden Ansprüche, **dadurch gekennzeichnet, dass** auf der Trägerplatte (3) ein Fußbodenbelag (1) aufgeklebt ist.

3. Fußbodenplatte nach einem der vorhergehenden Ansprüche, **dadurch gekennzeichnet, dass** die zusätzliche Platte (4) aus einem Metallblech hergestellt ist.

4. Fußbodenplatte nach einem der Ansprüche 1 oder 2, **dadurch gekennzeichnet, dass** die zusätzliche Platte (4) aus einem Verbundwerkstoff, insbesondere aus Kohlefaserverstärktem Kunststoff (CFK) oder glasfaserverstärktem Kunststoff (GFK), hergestellt ist.

5. Fußbodenplatte nach einem der vorhergehenden Ansprüche, **dadurch gekennzeichnet, dass** die zusätzliche Platte (4) mittels eines viskoelastischen Klebstoffes mit der Trägerplatte (3) verklebt wird.

6. Fußbodenplatte nach einem der vorhergehenden Ansprüche, **dadurch gekennzeichnet, dass** auf der zusätzlichen Platte (4) eine Dämmschicht (7) aufgebracht ist.

7. Fußbodenplatte nach einem der vorhergehenden Ansprüche, **dadurch gekennzeichnet, dass** an der Trägerplatte (3) Abstandhalter (6) vorgesehen sind, und dass die Abstandhalter (6) sich gegen eine tragende Struktur (10) abstützen.

8. Fußbodenplatte nach Anspruch 7, **dadurch gekennzeichnet, dass** zwischen dem Abstandhalter (6) und der tragenden Struktur (10) eine bevorzugt gummielastische Schicht (8) vorgesehen ist.

9. Fußbodenplatte nach einem der vorhergehenden Ansprüche, **dadurch gekennzeichnet, dass** die zusätzliche Platte (4) flächig und/oder flexibel mit der Trägerplatte (3) verklebt wird.

## Claims

1. A floor board for a rail-bound vehicle comprising a support plate (3), wherein at least on one side of the support plate (3) at least in some regions an additional plate (4) is fastened in a planar manner such that during translatory movements between said plate and the support plate high mechanical losses occur, **characterized in that** the support plate (3) consists of plywood or a sandwich plate with aluminum cover layers and honeycomb or foam cores, and that the additional plate (4) is segmented.

2. A floor board according to any one of the preceding claims, **characterized in that** a floor covering (1) is glued on the support plate (3).

3. A floor board according to any one of the preceding claims, **characterized in that** the additional plate (4) is made of sheet metal.

4. A floor board according to any one of Claims 1 or 2, **characterized in that** the additional plate (4) is made of a composite material, in particular of carbon-fiber reinforced plastic (CFRP) or glass-fiber reinforced plastic (GFRP).

5. A floor board according to any one of the preceding claims, **characterized in that** the additional plate (4) is bonded with the support plate (3) by means of a viscoelastic adhesive.

6. A floor board according to any one of the preceding claims, **characterized in that** an insulating layer (7) is applied to the additional plate (4).

7. A floor board according to any one of the preceding claims, **characterized in that** spacers (6) are provided on the support plate (3), and that the spacers (6) are supported against a supporting structure (10).

8. A floor board according to Claim 7, **characterized in that** a preferably rubber-elastic layer (8) is provided between the spacer (6) and the supporting structure (10).

9. A floor board according to any one of the preceding claims, **characterized in that** the additional plate (4) is bonded with the support plate (3) in a planar and/or flexible manner.

## Revendications

1. Plaque de sol pour un véhicule ferroviaire, comportant une plaque support (3), une plaque (4) supplémentaire étant fixée au moins sur un côté de la plaque support (3) au moins par tronçons de telle sorte que, en présence de mouvements de poussée entre cette plaque et la plaque support, il apparaît des pertes mécaniques importantes, **caractérisée en ce que** la plaque support (3) se compose de contreplaqué ou d'un panneau sandwich avec couches de recouvrement en aluminium et âmes en nid d'abeille ou en mousse, et **en ce que** la plaque (4) supplémentaire est segmentée.

2. Plaque de sol selon l'une des revendications précédentes, **caractérisée en ce qu'**un revêtement de sol (1) est collé sur la plaque support (3).

3. Plaque de sol selon l'une des revendications précédentes, **caractérisée en ce que** la plaque (4) supplémentaire est fabriquée en tôle métallique.

4. Plaque de sol selon l'une des revendications 1 ou 2, **caractérisée en ce que** la plaque (4) supplémentaire est fabriquée en matériau composite, en particulier en matière plastique renforcée de fibre de carbone ou en matière plastique renforcée de fibre de verre.

5. Plaque de sol selon l'une des revendications précédentes, **caractérisée en ce que** la plaque (4) supplémentaire est collée avec la plaque support (3) au moyen d'une colle viscoélastique.

6. Plaque de sol selon l'une des revendications précédentes, **caractérisée en ce qu'**une couche isolante (7) est appliquée sur la plaque (4) supplémentaire.

7. Plaque de sol selon l'une des revendications précédentes, **caractérisée en ce que** des éléments d'espacement (6) sont prévus sur la plaque support (3) et **en ce que** les éléments d'espacement (6) s'appuient contre une structure (10) porteuse.

8. Plaque de sol selon la revendication 7, **caractérisée en ce qu'**une couche (8) présentant de préférence l'élasticité du caoutchouc est prévue entre l'élément d'espacement (6) et la structure (10) porteuse.

9. Plaque de sol selon l'une des revendications précédentes, **caractérisée en ce que** la plaque (4) supplémentaire est assemblée par collage sur toute sa surface et/ou de façon flexible avec la plaque support (3).
